# EUROPÄISCHE PATENTSCHRIFT

(11) **EP 4 294 775 B1**
(45) Veröffentlichungstag und Bekanntmachung des Hinweises auf die Patenterteilung: **22.01.2025**
(21) Anmeldenummer: 22707409.3
(22) Anmeldetag: 18.02.2022
(51) Int. Cl.: C04B 28/02, C04B 28/04, C04B 111/28

(54) **WÄRMEDÄMMENDER PUTZ**
HEAT-INSULATING RENDER
ENDUIT D'ISOLATION THERMIQUE

(30) Priorität: 19.02.2021 DE 102021103937
(43) Veröffentlichungstag der Anmeldung: 27.12.2023
(73) Patentinhaber: Glasmit IP GmbH I.G., 29614 Soltau (DE)
(72) Erfinder: HIDIR, Metin, 23566 Lübeck (DE)
(74) Vertreter: Stork Bamberger Patentanwälte PartmbB
(86) Internationale Anmeldenummer: PCT/EP2022/054062
(87) Internationale Veröffentlichungsnummer: WO 2022/175442

(56) Entgegenhaltungen:
- WO-A1-2014/162097
- CN-A- 106 082 882
- CN-A- 106 587 762
- CN-A- 110 317 021
- DE-A1- 10 327 347
- DE-A1- 19 754 826
- DE-U1- 202019 103 866
- RU-C1- 2 134 666
- US-B2- 9 296 657

## Beschreibung

Die Erfindung betrifft einen Dämmputz. Die Erfindung betrifft ferner die Verwendung des erfindungsgemäßen Dämmputzes.

Als Baustoff kommt Putz eine wichtige Bedeutung zu. Er dient zur Herstellung eines glatten Untergrundes z. B. auf Mauerwerk. Neben dieser Funktion der Glättung können dem Putz noch zahlreiche weitere Funktionen zukommen. So kann der Putz der Regulierung der Raumfeuchte, der Wasserabweisung, dem Brand- oder Schallschutz und insbesondere auch der Wärmedämmung dienen. Putz besteht aus mehreren Bestandteilen und wird üblicherweise nach dem verwendeten Bindemittel bezeichnet. So gibt es Zementputz, Kalkputz, Kalkzementputz, Gipsputz, Silikatputz oder Kunstharzputz, um einige der am häufigsten verwendeten Putze zu nennen. Ihren Namen erhalten die Putze üblicherweise von ihrem Bindemittel, das Haupteinfluss auf die Putzeigenschaften hat. Neben Bindemittel bestehen Putze üblicherweise aus Zuschlagstoffen und Wasser.

Häufig verwendete Zuschlagstoffe sind Quarzsand, Kies, Glas, Gesteinsmehle, Stroh, Tierhaare, Glasfaser, Vermiculit, Schaumglasgranulat, Kork oder Blähton. Die vier letztgenannten Zuschlagstoffe spielen eine wichtige Eigenschaft, wenn es um die Wärmeleitfähigkeitseigenschaften der Putze geht. Weiterhin können Putze noch Additive enthalten, die dem Putz zusätzliche Eigenschaften verleihen, ihn z. B. mikrobiozid machen.

Angesichts der immer weiter steigenden Energiekosten kommt der Wärmedämmung von Gebäuden eine zunehmend große Bedeutung zu. Entsprechend besteht am Markt der Bedarf nach der Entwicklung von Wärmedämmputzen, die bessere Wärmedämmungseigenschaften aufweisen als herkömmliche Dämmputze.

Maß für die Wärmedämmung eines Bauteiles ist der Wärmedurchgangskoeffizient, der auch als Wärmedämmwert bezeichnet wird. Der Wärmedurchgangskoeffizient wird in W/(m²·K) angegeben. Er wird im Wesentlichen bestimmt durch die Wärmeleitfähigkeit, die auch als Wärmeleitkoeffizient bezeichnet wird, des verwendeten Materials sowie dessen Dicke. Die Wärmeleitfähigkeit λ wird angegeben in W/(m·K). Sie ist ein Maß dafür, wie gut ein Material Wärme leitet oder nicht. Anhand dieser Stoffeigenschaft lässt sich ablesen, ob ein Material zur Wärmedämmung besonders geeignet ist. Je kleiner die Wärmeleitfähigkeit eines Materials, umso besser ist dessen Wärmedämmung. Typische Wärmeleitfähigkeitswerte für Putze liegen bei 0,7 W/(m·K), so z. B. für Kalkputz. Kalkzementputz weist eine Wärmeleitfähigkeit von 1,0 W/(m·K) und spezieller Thermoputz von 0,11 W/(m·K).

Um die Wärmedämmung bei Gebäuden zu verbessern, wäre es wünschenswert, über einen Putz mit einem geringeren Wärmeleitfähigkeitswert zu verfügen. Es besteht die Möglichkeit, in den Putz Zuschlagstoffe einzuarbeiten, die einen sehr geringen Wärmeleitfähigkeitswert aufweisen wie z. B. expandiertes Polystyrol (EPS) (λ = 0,035-0,05 W/(m·K)), Mineralwolle (λ = 0,032-0,05 W/(m·K)), Aerogel (λ = 0,017-0,021 W/(m·K)) oder Zellulose (λ = 0,037-0,045 W/(m K)).

Dabei ist allerdings zu berücksichtigen, dass der Putz auch weiteren Anforderungen genügen muss, um als Baustoff zum Einsatz zu kommen. So ist eine gewisse Druckfestigkeit erforderlich. Der Putz darf im Laufe der Zeit keine Risse oder Abrieb bilden. Er muss leicht zu verarbeiten sein, möglichst wenig Wasser benötigen, und er sollte keinen Volumenverlust beim Mischen zeigen, um die gewünschte Dichte erreichen zu können. Schließlich spielen die Kosten eine relevante Rolle. d. h. der Putz muss auch in preislicher Hinsicht wettbewerbsfähig zu herkömmlichen Putzen sein. So gibt es zwar stark wärmedämmende Putze. Diese sind mit einem Preis von ca. EUR 3 pro Liter gegenüber herkömmlichen Putzen, die unter EUR 1 pro Liter kosten, nicht massentauglich.

Herkömmliche Putze erfüllen von diesen Anforderungen Teile, nie jedoch alle. Sogenannte "Hollowsphere-Putze" haben z. B. eine geringe Wärmeleitfähigkeit und verlieren beim Mischprozess kein Volumen. Weil sie aus Glas hergestellt sind und die Wasseraufnahme sehr gering ist, binden sie sich sehr gut mit Zement und den anderen Bindemitteln. Da die Korngröße sehr klein ist, ist die Oberfläche zu groß, was eine große Menge an Zement und Bindemitteln erfordert. Das Rissbildungsrisiko wächst mit der Zeit. Außerdem benötigt Hollowsphere-Putz, dadurch dass es ein weiches Material ist, viel Zement und Bindemittel, um auszuhärten.

Bei Perlit-Putzen handelt es sich um solche, die ausschließlich aus Perlit bestehen. Perlit-Putz ist trotz sehr guter Wärme- und Schallschutzeigenschaften aufgrund seiner Struktur wasserabsorbierend und zerbrechlich/ instabil. Es kann beim Mischen sehr leicht mehr oder weniger brechen. Dadurch ändert sich ständig die Intensität des Putzes. Da er sehr wasseraufnahmefähig ist, entzieht er dem Zement das Wasser, und somit kann das Produkt schlechter aushärten.

Aerogel-Putze schließlich weisen zwar gute Wärmedämmeigenschaften auf, aber sie sind sehr teuer in der Herstellung, da das Ausgangsmaterial Aerogel sehr teuer ist. Hinzu kommt, dass diese Putze spezielle Anforderungen in der Verarbeitung haben, die die Handhabung schwierig machen.

WO 2014/162097 A1 offenbart die Zusammensetzung A1 und die Zusammensetzung C7 für Beschichtungen im Sinne von Dämmputzen. Beide enthalten wenigstens Weisszement, Luftkalk, Metakaolin, Polystyrolschaumgranulatkugeln, Gelbpigment, Vinylacetat-Ethylencopolymer, welches in Form von Latex vorliegen kann, Magnesiumstearat als Hydrophobierer, Slipon RN7002 Schäumungsmittel, Walocel MK10000 Verdicker. Alternativ zu Polystyrolschaumgranulatkugeln werden u.a. gelistet Hohlglaskugeln, Blähglas, Perlit und auch Aerogel. Diese Beschichtung hat eine Druckfestigkeit von mindestens 0,40 MPa und eine Wärmeleitfähigkeit von höchstens 45 mW/m*K.

Aufgabe der vorliegenden Erfindung war es daher, einen Dämmputz zur Verfügung zu stellen, der bei hinreichender Druck- und Abriebfestigkeit ohne Volumenverlust beim Mischen und gegebener einfacher Verarbeitbarkeit gegenüber herkömmlichen Dämmputzen verbesserte Wärmeleitfähigkeitswerte, insbesondere von λ < 0,05 W/(m·K) aufweist.

Überraschenderweise hat sich gezeigt, dass ein Dämmputz, der die folgenden Substanzen umfasst:
a) 25 bis 40 Gew.-%, insbesondere 25 bis 35 Gew.-%, Zement,
b) 10 bis 60 Gew.-%, insbesondere 10 bis 55 Gew.-%, Blähglas,
c) 2 bis 7 Gew.-%, insbesondere 3 bis 6 Gew.-%, einer Polymerdispersion eines Vinylacetat-Ethylencopolymers,
d) 1 bis 50 Gew.-%, insbesondere 5 bis 45 Gew.-%, Perlit in Kugelform mit einer Korngröße von 0,01 bis 0,5 mm,
e) 0 bis 1 Gew.-%, insbesondere 0,5 bis 0,8 Gew.-%, Zellulose,
f) 1 bis 9 Gew.-%, insbesondere 4 bis 7 Gew.-%, Hohlglaskugeln mit einem Durchmesser von 30 bis 120 µm,
g) 0 bis 1 Gew.-%, insbesondere 0,3 bis 0,7 Gew.-%, Glasfaser,
h) 0 bis 0,7 Gew.-%, insbesondere 0,3 bis 0,6 Gew.-%, aktivierter Natriumbentonit,
i) 0 bis 0,5 Gew.-%, insbesondere 0,15 bis 0,3 Gew.-%, eines Dispergiermittels,
j) 0 bis 3 Gew.-%, insbesondere 0,5 bis 1,5 Gew.-%, Zinkborat,
k) 0 bis 5 Gew.-%, insbesondere 0,15 bis 0,3 Gew.-%, Fließmittel,
l) 0 bis 5 Gew.-%, insbesondere 0,15 bis 5 Gew.-%, eines Aerogels sowie
m) 0 bis 5 Gew.-%, insbesondere 0,1 bis 0,2 Gew.-%, einer Anti-Mikroben-Verbindung,
wobei die Summe der Komponenten a) bis m) 100 Gew.-% ergibt, diese Aufgaben löst und gegenüber herkömmlichen Dämmputzen deutlich verbesserte Wärmeleitfähigkeitswerte aufweist. Darüber hinaus erfordert der erfindungsgemäße Putz wenig Wasser, er weist eine hohe Druckfestigkeit von mindestens 1 N/mm² auf, zeigt keine Rissbildung oder Abrieb im Laufe der Zeit. Der erfindungsgemäße Putz lässt sich leicht verarbeiten und ist einfach in der Handhabung. Zudem weist er eine gute Haftfestigkeit auf, er ist nicht brennbar und umweltfreundlich. Beim Mischen entsteht kein Volumenverlust.

"Putz" oder "Dämmputz" im Sinne der vorliegenden Erfindung wird als Kurzbezeichnung für die Trockenmischung zur Herstellung des anwendungsfertigen Dämmputzes verwendet, d. h. für die Mischung der festen Bestandteile. Diese wird üblicherweise als Sackware angeboten und vertrieben. Um den anwendungsfertigen Putz zu erhalten, wird diese Trockenmischung mit Wasser angerührt. Dabei kommen von 10 bis 15 I, insbesondere von 11 bis 13 I Wasser auf 9 kg Putz, so dass man insgesamt von 19 bis 24 kg, insbesondere von 20 bis 22 kg anwendungsfertigen Putz erhält. Die erforderliche Wassermenge variiert einmal in Abhängigkeit der Temperatur. Außerdem variiert die erforderliche Wassermenge, da zumindest ein Teil der Komponenten im Putz Naturprodukte sind, die teilweise in der Wasseraufnahme variieren. Der Fachmann weiß um die erforderliche Wassermenge. Das Verhältnis Putz/Wasser ist richtig, wenn der anwendungsfertige Putz eine homogene Masse bildet, die an der Maurerkelle haftet.

Zusätzlich zu den vorstehend genannten Substanzen kann der erfindungsgemäße Putz weitere Additive wie Salze, Verbindungen zur Einstellung des pH-Werts, Antioxidationsmittel, Farbstoffe, Pigmente und/oder Konservierungsmittel enthalten. Solche Additive sind vorzugsweise zu nicht mehr als 10 Gew.-%, insbesondere zu nicht mehr als 5 Gew.-% auf die Gesamtmenge (Putz plus zusätzliche Additive) enthalten.

Besonders geeignet ist ein Dämmputz der abgesehen von den Substanzen a) bis m) keine weiteren Substanzen enthält. Bei der Verarbeitung wird lediglich Wasser zum Anrühren des Putzes hinzugefügt.

Als Zement kommt vorzugweise Portlandzement, insbesondere ultraweißer Zement zum Einsatz. Vorzugsweise wird ein Zement verwendet, bei dem mindestens 3.000 Partikel, vorzugsweise mindestens 5.000 Partikel auf einen cm³ kommen.

Zement wird nach der Norm DIN EN 197-1 klassifiziert. Erfindungsgemäß bevorzugt kommt ein Zement vom Typ CEM I (Portlandzement) oder CEM II (Portlandkompositzement) zum Einsatz. Auch Zementtypen, die bezüglich einer anderen Norm klassifiziert sind, sind für die vorliegende Erfindung geeignet.

Der Anteil des Zements an dem Dämmputz beträgt 25 bis 40 Gew.-%, insbesondere 25 bis 35 Gew.-%, und ganz besonders bevorzugt 25 bis 30 Gew.-%.

Blähglas wird aus recyceltem Altglas hergestellt. Dazu wird das Altglas in Mühlen zu Glasmehl zerkleinert, im Folgenden mit Binde- und Blähmittel vermengt und granuliert. Durch Temperaturen von 900 bis 1.000 °C expandiert das Granulat, wobei sich im Glas feine Gasporen bilden.

Übliche Korngrößen liegen im Bereich von 0,04-16 mm. Das Granulat weist die Form von Kugeln oder Rundkörnern auf. Erfindungsgemäß ist solches Blähglas besonders bevorzugt, dass eine Korngröße von 0,5 bis 4 mm, insbesondere von 1 bis 2 mm, aufweist.

Blähglas ist wasserabweisend und lässt sich aufgrund seiner Kugelform händisch und maschinell leicht verarbeiten. Da es bei 900 - 1000 °C gehärtet wurde, ist es formstabil. Da die Kügelchen nicht zerbrechen, verringert sich das Volumen des Putzes auch bei 60 - 120 U / min im Mischer nicht. Als Recyclingprodukt ist Blähglas sehr umweltfreundlich. Es verbindet sich gut mit dem Zement und dem Polymerpulver. Blähglas weist sehr gute Wärmedämmungs- und Geräuschdämmungseigenschaften auf. Außerdem trägt es signifikant zur Gewichtreduzierend beim Putz bei.

Die Dichte des Blähglases liegt bei einer Korngröße von 1-2 mm vorzugsweise im Bereich von 100 bis 500 kg/m³, insbesondere zwischen 100 und 300, besonders bevorzugt im Bereich von 120 bis 160 kg/m³. Blähglas wird z. B. unter der Bezeichnung "Poraver" von der Dennert Poraver GmbH vertrieben. Blähglas mit besonders geringer Dichte wird von der Glasmit GmbH hergestellt.

Der Anteil des Blähglases an dem Dämmputz beträgt 10 bis 60 Gew.-%, insbesondere 10 bis 55 Gew.-%.

Anstelle eines herkömmlichen Perlits mit geringer Festigkeit in einer normalen, formlosen Struktur, kommt erfindungsgemäß ein formstabiles rundes Perlit, ein Perlit in Kugelform, zum Einsatz. Vorzugsweise weist es einen niedrigen Wasserabsorptionsgrad. Dies führt zu einer besseren und stabileren Verarbeitbarkeit sowie besseren Ergebnisse an der Wand. Die Korngröße des für den erfindungsgemäßen Putz verwendeten Perlits, der auch als "Sphere Perlit" bezeichnet wird, beträgt von ca. 0,01 bis 0,5 mm.

Der Anteil des runden Perlits an dem Dämmputz beträgt 1 bis 50 Gew.-%, vorzugsweise 5 bis 45 Gew.-%.

In einer bevorzugten Ausführungsform beträgt der Anteil an Blähglas 10 bis 30 Gew.-%, insbesondere 10-25 Gew.-%, vorzugsweise 10 bis 20 Gew.-%, und ganz besonders bevorzugt 10 bis 12 Gew.-% und der Anteil an Perlit in Kugelform 30 bis 50 Gew.-%, vorzugsweise 30 bis 45 Gew.-%, insbesondere 32 bis 42 Gew.-%, ganz besonders bevorzugt 34 bis 40 Gew.-%.

In einer anderen bevorzugten Ausführungsform beträgt der Anteil an Blähglas 30 bis 60 Gew.-%, insbesondere 35 bis 55 Gew.-%, vorzugsweise 35 bis 50 Gew.-% und ganz besonders bevorzugt 45 bis 50 Gew.-% und der Anteil an Perlit in Kugelform 5 bis 20 Gew.-%, insbesondere 5 bis 15 Gew.-%, vorzugsweise 7 bis 15 Gew.-%.

Dabei weist das Blähglas vorzugsweise eine Korngröße von 1 bis 2 mm und eine Dichte im Bereich von 120 bis 160 kg/m³ auf.

In einer weiteren bevorzugten Ausführungsform enthält der erfindungsgemäße Putz 30 bis 55 Gew.-%, insbesondere 35 bis 55 Gew.-%, Blähglas mit einer Dichte im Bereich von 120 bis 160 kg/m³ bei einer Korngröße von 1 bis 2 mm und optional 1 bis 9 Gew.-% Blähglas mit einer Dichte > 160 kg/m³ bei einer Korngrößer von 1 bis 2 mm, wobei der maximale Gesamtanteil an Blähglas 60 Gew.-% beträgt.

Die Polymerdispersion eines Vinylacetat-Ethylencopolymers (Substanz c)) sorgt für verbesserte Hafteigenschaften und Flexibilität. Die Polymerdispersion bewirkt die Entstehung von Luftblasen bei der Herstellung, was für zusätzliche Wärmeisolierung sorgt. Außerdem verringert sie die Wasserabsorption des Putzes und erhöht dessen Elastizität. Polymerdispersionen sind kolloidal stabile Dispersionen von Polymerpartikeln in einer wässrigen Phase, wobei der Partikeldurchmesser zwischen einigen zehn Nanometern und wenigen Millimetern liegt. Eine Polymerdispersion, die für den erfindungsgemäßen Putz zum Einsatz kommen kann wir unter der Bezeichnung Elotex MP 2080 von der Firma Celanese Switzerland AG vertrieben.

Der Anteil der Polymerdispersion an dem Dämmputz beträgt 2 bis 7 Gew.-%, insbesondere 3 bis 6 Gew.-%, ganz besonders bevorzugt 3, 5 bis 5,5 Gew.-%.

Zellulose ist mit einem Gewichtsanteil von 0 bis 1 Gew.-%, insbesondere 0,1 bis 1 Gew.-%, bevorzugt 0,4 bis 0,8 Gew.-%, vorzugsweise von 0,5 bis 0,8 Gew.-%, ganz besonders bevorzugt 0,6 bis 0,75 Gew.-% in dem erfindungsgemäßen Putz enthalten. Die Zellulose erhält auch in kaltem Wasser sehr schnell Viskosität. Je schneller der Putz Viskosität erhält, desto geringer ist der Bruch und Volumenverlust. Darüber hinaus nimmt die ausgewählte Zellulose das Wasser auf und gibt es wieder ab und versorgt den Zement mit dem benötigten Wasser. Zellulose ist wichtig für die Hafteigenschaften und das Fließverhalten des Putzes. Daher ist ein Putz, der Zellulose enthält, erfindungsgemäß besonders bevorzugt.

Die Hohlglaskugeln sind mit einem Gewichtsanteil von 1 bis 9 Gew.-%, insbesondere 3 bis 8 Gew.-%, vorzugsweise von 4 bis 7 Gew.-%, ganz besonders bevorzugt 5 bis 6 Gew.-% in dem Putz enthalten. Dabei weisen die Hohlglaskugeln einen Durchmesser von 30 bis 120 µm, Solche Hohlglaskugeln werden z. B. unter der Marke Hollowsphere und den Bezeichnungen K1, K15, K20, K25, K37 oder K46 von der Firma 3M angeboten. Die alkalische Beständigkeit der Hohlkugeln ist sehr hoch. Ihr pH-Wert liegt zwischen 10 und 11. Sie sorgen für eine sehr gute Wärmedämmung und großen Komfort beim Auftrag aufgrund der Kugelform. Neben dem Blähglas ist der Werkstoff Glas im erfindungsgemäßen Putz somit in Form mikroskopisch kleiner und wasserunlöslicher Glashohlkugeln, eingesetzt.

Der erfindungsgemäße Putz enthält des Weiteren 0 bis 1 Gew.-%, insbesondere 0,1 bis 1 Gew.-%, bevorzugt 0,2 bis 0,8 Gew.-%, vorzugsweise 0,3 bis 0,7 Gew.-%, ganz besonders bevorzugt 0,5 bis 0,6 Gew.-% Glasfaser. Die Glasfaser weist vorzugsweise eine Faserlänge von 0,1 bis 10 mm, insbesondere von 0,1 bis 4 mm auf. Ein bevorzugter Durchmesser der Glasfasern beträgt von 5 bis 20, insbesondere von 10 bis 18 µm pro Filament. Zirkonium-Glasfaser mit einem Zirkonium-Gehalt von mindestens 10 Gew.-% ist besonders bevorzugt, da sie mehr alkalische Resistenz enthält. Glasfasern verhindern die Rissbildung im Putz, so dass ein Putz der einen Anteil an Glasfaser enthält, erfindungsgemäß besonders bevorzugt ist. Als Glasfaser kann beispielsweise solche, die unter der Bezeichnung FIBRIN AR 1200 der Firma Fibrin Austria angeboten wird, zum Einsatz kommen.

Der erfindungsgemäße Putz enthält weiterhin 0 bis 0,7 Gew.-%, insbesondere 0,2 bis 0,7 Gew.-%, bevorzugt 0,3 bis 0,6 Gew.-%, und ganz besonders bevorzugt 0,4 bis 0,5 Gew.-% aktivierten Natriumbentonit. Natriumbentonit ist ein äußerst wirksames hydrophobes und wasserabweisendes Additiv für Mörtel auf Zementbasis. Durch das Verändern der elektrostatischen Struktur des Materials wird das darauf befindende Wasser in eine Kugel umgewandelt und verhindert das Eindringen des Wassers in die Kapillarrisse. Ein Putz, der aktivierten Natriumbentonit enthält, ist daher ein besonders bevorzugter Putz im Sinne der vorliegenden Erfindung. Aktivierter Natriumbentonit, der für den erfindungsgemäßen Putz zum Einsatz kommen kann wird z. B. unter der Bezeichnung IBECO SEAL 80 von der Firma IMERYS Metalcasting Germany GmbH angeboten.

Der erfindungsgemäße Putz enthält weiterhin 0 bis 0,5 Gew.-%, insbesondere 0,05 bis 0,5 Gew.-%, bevorzugt 0,1 bis 0,4 Gew.-%, ganz besonders bevorzugt 0,15 bis 0,3 Gew.-% eines Dispergiermittels. Als Dispergiermittel kommt vorzugsweise ein Nanopulver-Rohstoff zum Einsatz, wie er unter der Bezeichnung √√CHECKFLOW^{®} NanoGAP von CIMSA, Bursa, Türkei angeboten wird. Es handelt sich um einen Nanopulver-Rohstoff, der als Netzmittel, Dispergiermittel und Weichmacher in mineralischen Putzen, Reparaturmörteln und zementbasierten Bauchemikalien verwendet wird. Das Nanopulver erzeugt eine homogene Zementverteilung mit homogener Stabilität und verhindert die Rissbildung, indem es die durch Wasserverlust beim Aushärten verursachte Schrumpfung verringert, insbesondere in Mörtel- und Isoliermaterialien auf Zement-, Schlacken-, Trass- und Kalkbasis. Es erhöht außerdem die hohe Frostbeständigkeit in gehärteten Mörteln und verhindert das Ausblühen. Es erhöht die Verarbeitbarkeit des Materials, indem die Zementpartikel in Bauchemikalien besser dispergiert und benetzt werden. Es bietet eine Falte zum Pumpen des Materials in Gips und Mörtel. Ein Putz, der ein Dispergiermittel, wie vorstehend beschrieben, enthält, ist daher besonders bevorzugt.

Außerdem enthält der erfindungsgemäße Putz 0 bis 3 Gew.-%, insbesondere 0,5 bis 1,5 Gew.-%, besonders bevorzugt 0,9 bis 1,3 Gew.-%, Zinkborat. Zinkborat (2ZnO·3B₂O₃·3.5H₂O) ist brandhemmend und bietet Stabilität, so dass ein Putz mit Zinkborat eine bevorzugte Ausführungsform der vorliegenden Erfindung darstellt.

Fließmittel ist in dem erfindungsgemäßen Putz mit 0 bis 5 Gew.-%, insbesondere 0,05 bis 2 Gew.-%, bevorzugt 0,1 bis 0,4 Gew.-%, vorzugsweise von 0,15 bis 0,3 Gew.-%, ganz besonders bevorzugt 0,2 bis 0,3 Gew.-% enthalten. Als Fließmittel kommt vorzugsweise Melamin, insbesondere in Form von Melaminsulfonat zum Einsatz. Melaminsulfonat verbessert das Fließverhalten und die Flexibilität bei zementgebundenen Putzen. Es verbessert auch die Aushärtung des Putzes. Daher ist ein Putz, der einen Fließmittelanteil enthält, besonders bevorzugt.

Aerogele sind hochporöse Festkörper, meist aus amorphem Siliziumdioxid, deren Volumen zu über 90 Prozent aus luftgefüllten Poren bestehen. Diese winzigen Poren sorgen dafür, dass die Energieübertragung, welche über die Bewegung der Luftmoleküle stattfindet, extrem verringert wird. Das macht Aerogele zu einem der effizientesten Dämmstoffe. Ein Liter dieses Materials wiegt nur 70 bis 100 Gramm und ist somit zehnmal leichter als Wasser. Vorzugsweise ist das das Aerogel l) ein Aerogel auf Silikatbasis. Besonders bevorzugt beträgt das Raumgewicht des Aerogels von 50 bis 150 kg/m³. Aerogele sind in dem erfindungsgemäßen Putz mit 0 bis 8 Gew.-%, also optional in dem Putz enthalten, insbesondere mit 0,05 bis 8 Gew.-%, bevorzugt von 0,1 bis 7 Gew.-%, vorzugsweise von 0,15 bis 5 Gew.-%, ganz besonders bevorzugt 0,2 bis 1 Gew.-%. Aufgrund der vorstehend beschriebenen Eigenschaften ist ein Putz mit Aerogelanteil besonders bevorzugt.

Besonders bevorzugt enthält der erfindungsgemäße Putz 0 bis 5 Gew.-%, insbesondere 0,05 bis 4 Gew.-%, bevorzugt 0,1 bis 1 Gew.-%, vorzugsweise von 0,1 bis 0,2 Gew.-% einer Anti-Mikroben-Verbindung. Anti-Mikroben-Verbindungen töten Mikroorganismen ab, insbesondere Bakterien, Viren, Pilze und Algen. Als solche können Mikrobiozide zum Einsatz kommen. Besonders bevorzugt finden Mineralsalzmischungen Anwendung, die das mikrobielle Wachstum von Mikroben ohne die Verwendung von Bioziden verhindern. Ein Beispiel einer solchen Mineralsalzmischung ist das unter der Bezeichnung Omyasmart Zero vertriebene Produkt der Firma Omya International AG, Schweiz.

Die Zugabe einer Anti-Mikroben-Verbindung erfolgt insbesondere bei Innenputz, um Schimmelbildung vorzubeugen.

Der erfindungsgemäße Putz weist vorzugsweise eine Dichte von 120 bis 190 kg/m³ auf.

Die Erfindung betrifft ferner die Verwendung des Dämmputzes als wärmedämmender Putz. Mit dem erfindungsgemäßen Dämmputz kann eine Wärmeleitfähigkeit von λ ≤ 0,049 oder 0,045 W/(m·K) erreicht werden. Der Dämmputz weist damit besonders gute Isoliereigenschaften auf bei zugleich guter Verarbeitbarkeit.

Der Putz wird mit Wasser angerührt. Dabei kommen auf 9 kg Putz von 10 bis 15 I, insbesondere von 11 bis 13 I Wasser.

Die folgenden Beispiele veranschaulichen die vorliegende Erfindung.

Dabei kommen folgende Substanzen zum Einsatz:
Zement 5000 der Firma CIMSA, Bursa/ Türkei
Elotex 2080 der Firma Celanese Switzerland AG, Sempach Station, Schweiz Omyasphere 220-FQ der Firma Omya International AG, Oftringen, Schweiz
Zellulose: Metolose Shin-Etsu 60004 der Shin-Etsu Chemical Co., Ltd., Tokio, Japan Hohlkugeln: 3M Glass Bubbles K15 der Firma 3M Deutschland GmbH
Blähglas: Poraver 1-2 der Firma Dennert Poraver GmbH, Schlüsselfeld, Deutschland
Blähglas: Glasmit 1-2 mit einer Dichte von 120 kg/m³ der Glasmit GmbH, Lübeck, Deutschland
Glasfaser: FIBRIN AR 1200 der Firma Fibrin Austria
Aktivierter Natriumbentonit: IBECO SEAL 80 der Firma IMERYS Metalcasting Germany GmbH
Dispergiermittel: √√CHECKFLOW^{®} NanoGAP der Firma CIMSA, Bursa/ Türkei Zinkborat der Firma Impag AG, Zürich, Schweiz
Fließmittel: Melaminsulfonat der Firma Korfez Kimya San. Ve Tic. AS, Istanbul, Türkei
Aerogel: AEROGEL granulat der Firma AGITEC AG, Dällikon, Schweiz
Anti-Mikroben-Verbindung: Omyasmart Zero vertriebene Produkt der Firma Omya International AG, Oftringen, Schweiz

Die Rezeptur ergibt 9.000 g Putzmischung, was einem Sack mit einem Inhalt von 50 I entspricht. Dazu werden alle Komponenten mit einem Rührstab verrührt. Diese trockene Putzmischung wird mit 11 l -13 l Wasser angerührt. Dazu wird das Pulver/der Trockenputz in einen Maurereimer gefüllt. Das Wasser wird zugegeben und ca. 3 Minuten gerührt, bis eine homogene Masse entsteht, die an einer Maurerkelle haftet - der anwendungsfertige Putz. Bei Bedarf wird weiteres Wasser zugegeben, bis die Masse homogen ist.

### Beispiel 1:

3.000 g Zement
1.150 g Blähglas Poraver 1-2
400 g Elotex 2080
3.500 g Sphere Perlit
60 g Zellulose
600 g Hollow Sphere
60 g Glasfaser
50 g Seal 80
20 g Nano Gap
100 g Zinkborat
20 g Melamin
40 g Aerogel
20 g Omyasmart Zero

### Beispiel 2:

2.850 g Zement
1.250 g Blähglas Poraver 1-2
500 g Elotex 2080
3.300 g Sphere Perlit
70 g Zellulose
700 g Hollow Sphere
60 g Glasfaser
50 g Seal 80
30 g Nano Gap
50 g Zinkborat
30 g Melamin
100 g Aerogel
10 g Omyasmart Zero

### Beispiel 3:

3.350 g Zement
400 g Blähglas Poraver 1-2
3.250 g Blähglas Glasmit 1-2
500 g Elotex 2080
400 g Sphere Perlit
70 g Zellulose
700 g Hollow Sphere
60 g Glasfaser
50 g Seal 80
30 g Nano Gap
50 g Zinkborat
30 g Melamin
100 g Aerogel
10 g Omyasmart Zero

### Vergleichsbeispiel 4:

Boramit Ökotherm der Firma B&O Baustoffe GmbH

### Vergleichsbeispiel 5:

Klimasan W (Perlite) der Firma Klimasan

### Vergleichsbeispiel 6:

Cerabran Aeroputz der Firma Cerabran

### Testmethoden:

Nach der für Putzmörtel relevanten DIN EN 998-1 werden Brandschutzklasse, Intensität/Rohdichte, Druckfestigkeit, Wasserdampf-Diffusionswiderstand und Verbrauch bestimmt. Die Bestimmung der Wärmeleitfähigkeit erfolgt nach DIN 4108/4:2017/07 und den Testmethoden nach DIN EN 12664/DIN 12667. Die Daten sind in den beiden folgenden Tabellen einmal für die erfindungsgemäßen Putze und dann für die Vergleichsputze dargestellt.

**Tabelle 1 - erfindungsgemäße Putze**

| Daten | Beispiel 1 | Beispiel 2 | Beispiel 3 |
|---|---|---|---|
| Wärmeleitgruppe | 042 | 039 | 039 |
| Brandschutzklasse | A1 | A1 | A1 |
| Intensität / Rohdichte | 170kg/m³ | 160kg/m³ | 120kg/m³ |
| DRUCKFESTIGKEIT | <1,0N/mm² | <1,0N/mm² | >1,0N/mm² |
| WASSERDAMPF-DIFFUSIONSWIDERSTAND | 6µ | 6µ | 6µ |
| Verbrauch | 1,8kg/m² | 1,8kg/m² | 1,4kg/m² |
| Verbrauch/Sack | 4,5 m²/cm | 4,5 m²/cm | 3,5 m²/cm |
| Preis/ Sack | ca. EUR 49,00 | ca. EUR 59,00 | ca. EUR 35,00 |
| Preis pro Liter | ca. EUR 1,09 | ca. EUR 1,30 | ca. EUR 0,78 |

**Tabelle 2 - Putze gemäß Vergleichsbeispielen**

| Daten | Vergleichsbsp. 4 BORAMIT Ökotherm | Vergleichsbsp. 5 Klimasan W (Perlite) | Vergleichsbsp. 6 CERABRAN Aeroputz |
|---|---|---|---|
| Wärmeleitgruppe | 047 | 077 | 028 |
| Brandschutzklasse | A1 | A1 | A1 |
| Intensität / Rohdichte | 180kg/m³ | 300kg/m³ | 160kg/m³ |
| DRUCKFESTIGKEIT | <1,0N/mm² | <1,5N/mm² | <0,5N/mm² |
| WASSERDAMPF-DIFFUSIONSWIDERSTAND | 6µ | 6µ | 6µ |
| Verbrauch | 1,9kg/m² | 3,2kg/m² | 1,7kg/m² |
| Verbrauch/Sack | 4,2 m²/cm | 3,5 m²/cm | 5,0m²/cm |
| Preis/ Sack | ca. EUR 39,00 | ca. EUR 33,00 | ca. EUR 150,00 |
| Preis pro Liter | ca. EUR 0,93 | ca. EUR 0,94 | ca. EUR 3,00 |

Es zeigt sich, dass die erfindungsgemäßen Putze der Beispiele 1 bis 3 eine deutlich geringere Wärmeleitfähigkeit λ aufweist als die Putze gemäß der Vergleichsbeispiele 4 und 5. Der Putz gemäß Vergleichsbeispiel 6 weist zwar eine noch bessere Wärmeleitfähigkeit auf, ist aber mit EUR 150 pro Sack bzw. EUR 3 pro Liter deutlich teurer als die erfindungsgemäßen Putze und damit nicht massentauglich. Die Druckfestigkeit liegt bei allen getesteten Putzen im gleichen Bereich. Besonders vorteilhaft ist Putz 3, der kostengünstiger ist und einen geringeren Verbrauch aufweist als die übrigen Putze.

## Patentansprüche

1. Dämmputz, der die folgenden Substanzen umfasst:
a) 25 bis 40 Gew.-%, insbesondere 25 bis 35 Gew.-%, Zement,
b) 10 bis 60 Gew.-%, insbesondere 10 bis 55 Gew.-%, Blähglas,
c) 2 bis 7 Gew.-%, insbesondere 3 bis 6 Gew.-%, einer Polymerdispersion eines Vinylacetat-Ethylencopolymers,
d) 1 bis 50 Gew.-%, insbesondere 5 bis 45 Gew.-%, Perlit in Kugelform mit einer Korngröße von 0,01 bis 0,5mm,
e) 0 bis 1 Gew.-%, insbesondere 0,5 bis 0,8 Gew.-%, Zellulose,
f) 1 bis 9 Gew.-%, insbesondere 4 bis 7 Gew.-%, Hohlglaskugeln mit einem Durchmesser von 30 bis 120 µm,
g) 0 bis 1 Gew.-%, insbesondere 0,3 bis 0,7 Gew.-%, Glasfaser,
h) 0 bis 0,7 Gew.-%, insbesondere 0,3 bis 0,6 Gew.-%, aktivierter Natriumbentonit,
i) 0 bis 0,5 Gew.-%, insbesondere 0,15 bis 0,35 Gew.-%, eines Dispergiermittels,
j) 0 bis 3 Gew.-%, insbesondere 0,5 bis 1,5 Gew.-%, Zinkborat,
k) 0 bis 5 Gew.-%, insbesondere 0,15 bis 0,3 Gew.-%, eines Fließmittels,
l) 0 bis 8 Gew.-%, insbesondere 0,15 bis 5 Gew.-%, eines Aerogels sowie
m) 0 bis 5 Gew.-%, insbesondere 0,1 bis 0,2 Gew.-%, einer Anti-Mikroben-Verbindung,
wobei die Summe der Komponenten a) bis m) 100 Gew.-% ergibt.

2. Dämmputz nach Anspruch 1, **dadurch gekennzeichnet, dass** er die Substanzen a) bis m) in den folgenden Gewichtsprozenten enthält:
a) 25 bis 40 Gew.-%, insbesondere 25 bis 35 Gew.-%, Zement,
b) 10 bis 30 Gew.-%, insbesondere 10 bis 25 Gew.-%, Blähglas,
c) 2 bis 7 Gew.-%, insbesondere 3 bis 6 Gew.-%, einer Polymerdispersion eines Vinylacetat-Ethylencopolymers,
d) 30 bis 50 Gew.-%, insbesondere 30 bis 45 Gew.-%, Perlit in Kugelform mit einer Korngröße von 0,01 bis 0,5mm,
e) 0 bis 1 Gew.-%, insbesondere 0,5 bis 0,8 Gew.-%, Zellulose,
f) 1 bis 9 Gew.-%, insbesondere 4 bis 7 Gew.-%, Hohlglaskugeln mit einem Durchmesser von 30 bis 120 µm,
g) 0 bis 1 Gew.-%, insbesondere 0,3 bis 0,7 Gew.-%, Glasfaser,
h) 0 bis 0,7 Gew.-%, insbesondere 0,3 bis 0,6 Gew.-%, aktivierter Natriumbentonit,
i) 0 bis 0,5 Gew.-%, insbesondere 0,15 bis 0,35 Gew.-%, eines Dispergiermittels,
j) 0 bis 3 Gew.-%, insbesondere 0,5 bis 1,5 Gew.-%, Zinkborat,
k) 0 bis 5 Gew.-%, insbesondere 0,15 bis 0,3 Gew.-%, eines Fließmittels,
l) 0 bis 8 Gew.-%, insbesondere 0,15 bis 5 Gew.-%, eines Aerogels sowie
m) 0 bis 5 Gew.-%, insbesondere 0,1 bis 0,2 Gew.-%, einer Anti-Mikroben-Verbindung,
wobei die Summe der Komponenten a) bis m) 100 Gew.-% ergibt.

3. Dämmputz nach Anspruch 1, **dadurch gekennzeichnet, dass** er die Substanzen a) bis m) in den folgenden Gewichtsprozenten enthält:
a) 25 bis 40 Gew.-%, insbesondere 25 bis 35 Gew.-%, Zement,
b) 30 bis 60 Gew.-%, insbesondere 35 bis 55 Gew.-%, Blähglas,
c) 2 bis 7 Gew.-%, insbesondere 3 bis 6 Gew.-%, einer Polymerdispersion eines Vinylacetat-Ethylencopolymers,
d) 5 bis 20 Gew.-%, insbesondere 7 bis 15 Gew.-%, Perlit in Kugelform mit einer Korngröße von 0,01 bis 0,5mm,
e) 0 bis 1 Gew.-%, insbesondere 0,5 bis 0,8 Gew.-%, Zellulose,
f) 1 bis 9 Gew.-%, insbesondere 4 bis 7 Gew.-%, Hohlglaskugeln mit einem Durchmesser von 30 bis 120 µm,
g) 0 bis 1 Gew.-%, insbesondere 0,3 bis 0,7 Gew.-%, Glasfaser,
h) 0 bis 0,7 Gew.-%, insbesondere 0,3 bis 0,6 Gew.-%, aktivierter Natriumbentonit,
i) 0 bis 0,5 Gew.-%, insbesondere 0,15 bis 0,35 Gew.-%, eines Dispergiermittels,
j) 0 bis 3 Gew.-%, insbesondere 0,5 bis 1,5 Gew.-%, Zinkborat,
k) 0 bis 5 Gew.-%, insbesondere 0,15 bis 0,3 Gew.-%, eines Fließmittels,
l) 0 bis 8 Gew.-%, insbesondere 0,15 bis 5 Gew.-%, eines Aerogels sowie
m) 0 bis 5 Gew.-%, insbesondere 0,1 bis 0,2 Gew.-%, einer Anti-Mikroben-Verbindung,
wobei die Summe der Komponenten a) bis m) 100 Gew.-% ergibt.

4. Dämmputz nach einem der Ansprüche 1 bis 3, **dadurch gekennzeichnet, dass** das Blähglas eine Korngröße von 0,5 bis 4 mm, insbesondere von 1 bis 2 mm, aufweist.

5. Dämmputz nach einem der Ansprüche 1 bis 4, **dadurch gekennzeichnet, dass** das Blähglas bei einer Korngröße von 1 bis 2 mm eine Dichte von 100 bis 500 kg/m³, zwischen 100 und 300, besonders bevorzugt zwischen 120 und 270 kg/m³, aufweist.

6. Dämmputz nach Anspruch 3, **dadurch gekennzeichnet, dass** er 30 bis 55 Gew.-%, insbesondere 35 bis 55 Gew.-%, Blähglas mit einer Dichte im Bereich von 120 bis 160 kg/m³ bei einer Korngröße von 1 bis 2 mm und optional 1 bis 9 Gew.-% Blähglas mit einer Dichte > 160 kg/m³ bei einer Korngrößer von 1 bis 2 mm enthält, wobei der maximale Gesamtanteil an Blähglas 60 Gew.-% beträgt.

7. Dämmputz nach einem der Ansprüche 1 bis 6, **dadurch gekennzeichnet, dass** das Fließmittel k) Melaminsulfonat ist.

8. Dämmputz nach einem der Ansprüche 1 bis 7, **dadurch gekennzeichnet, dass** das Aerogel I) ein Aerogel auf Silikatbasis ist.

9. Verwendung des Dämmputzes nach einem der Ansprüche 1 bis 8 zur Herstellung eines anwendungsfertigen wärmedämmenden Putzes.

## Claims

1. Insulating plaster comprising the following substances:
a) 25 to 40 % by weight, in particular 25 to 35 % by weight, of cement,
b) 10 to 60 wt.%, in particular 10 to 55 wt.%, expanded glass,
c) 2 to 7 % by weight, in particular 3 to 6 % by weight, of a polymer dispersion of a vinyl acetate-ethylene copolymer,
d) 1 to 50 % by weight, in particular 5 to 45 % by weight, perlite in spherical form with a grain size of 0.01 to 0.5 mm,
e) 0 to 1 wt.%, in particular 0.5 to 0.8 wt.%, cellulose,
f) 1 to 9 % by weight, in particular 4 to 7 % by weight, of hollow glass beads with a diameter of 30 to 120 µm,
g) 0 to 1 % by weight, in particular 0.3 to 0.7 % by weight, of glass fibre,
h) 0 to 0.7 % by weight, in particular 0.3 to 0.6 % by weight, of activated sodium bentonite,
i) 0 to 0.5 % by weight, in particular 0.15 to 0.35 % by weight, of a dispersing agent,
j) 0 to 3 wt.%, in particular 0.5 to 1.5 wt.%, zinc borate,
k) 0 to 5 % by weight, in particular 0.15 to 0.3 % by weight, of a superplasticiser,
l) 0 to 8 % by weight, in particular 0.15 to 5 % by weight, of an aerogel and
m) 0 to 5 % by weight, in particular 0.1 to 0.2 % by weight, of an anti-microbial compound,
where the sum of components a) to m) is 100% by weight.

2. Insulating plaster according to claim 1, **characterised in that** it contains the substances a) to m) in the following percentages by weight:
a) 25 to 40 % by weight, in particular 25 to 35 % by weight, of cement,
b) 10 to 30 wt.%, in particular 10 to 25 wt.%, expanded glass,
c) 2 to 7 % by weight, in particular 3 to 6 % by weight, of a polymer dispersion of a vinyl acetate-ethylene copolymer,
d) 30 to 50 % by weight, in particular 30 to 45 % by weight, perlite in spherical form with a grain size of 0.01 to 0.5 mm,
e) 0 to 1 % by weight, in particular 0.5 to 0.8 % by weight, cellulose,
f) 1 to 9 % by weight, in particular 4 to 7 % by weight, of hollow glass beads with a diameter of 30 to 120 µm,
g) 0 to 1 % by weight, in particular 0.3 to 0.7 % by weight, of glass fibre,
h) 0 to 0.7 % by weight, in particular 0.3 to 0.6 % by weight, of activated sodium bentonite,
i) 0 to 0.5 % by weight, in particular 0.15 to 0.35 % by weight, of a dispersing agent,
j) 0 to 3 wt.%, in particular 0.5 to 1.5 wt.%, zinc borate,
k) 0 to 5 % by weight, in particular 0.15 to 0.3 % by weight, of a superplasticiser,
l) 0 to 8 % by weight, in particular 0.15 to 5 % by weight, of an aerogel and
m) 0 to 5 % by weight, in particular 0.1 to 0.2 % by weight, of an anti-microbial compound,
where the sum of components a) to m) is 100% by weight.

3. Insulating plaster according to claim 1, **characterised in that** it contains the substances a) to m) in the following percentages by weight:
a) 25 to 40 % by weight, in particular 25 to 35 % by weight, of cement,
b) 30 to 60 wt.%, in particular 35 to 55 wt.%, expanded glass,
c) 2 to 7 % by weight, in particular 3 to 6 % by weight, of a polymer dispersion of a vinyl acetate-ethylene copolymer,
d) 5 to 20 % by weight, in particular 7 to 15 % by weight, perlite in spherical form with a grain size of 0.01 to 0.5 mm,
e) 0 to 1 wt.%, in particular 0.5 to 0.8 wt.%, cellulose,
f) 1 to 9 % by weight, in particular 4 to 7 % by weight, of hollow glass beads with a diameter of 30 to 120 µm,
g) 0 to 1 % by weight, in particular 0.3 to 0.7 % by weight, of glass fibre,
h) 0 to 0.7 % by weight, in particular 0.3 to 0.6 % by weight, of activated sodium bentonite,
i) 0 to 0.5 % by weight, in particular 0.15 to 0.35 % by weight, of a dispersing agent,
j) 0 to 3 wt.%, in particular 0.5 to 1.5 wt.%, zinc borate,
k) 0 to 5 % by weight, in particular 0.15 to 0.3 % by weight, of a superplasticiser,
l) 0 to 8 % by weight, in particular 0.15 to 5 % by weight, of an aerogel and
m) 0 to 5 % by weight, in particular 0.1 to 0.2 % by weight, of an anti-microbial compound,
where the sum of components a) to m) is 100% by weight.

4. Insulating plaster according to one of claims 1 to 3, **characterised in that** the expanded glass has a grain size of 0.5 to 4 mm, in particular of 1 to 2 mm.

5. Insulating plaster according to one of claims 1 to 4, **characterised in that** the expanded glass has a density of 100 to 500 kg/m³ , between 100 and 300, particularly preferably between 120 and 270 kg/m³ , with a grain size of 1 to 2 mm.

6. Insulating plaster according to claim 3, **characterised in that** it contains 30 to 55% by weight, in particular 35 to 55% by weight, of expanded glass with a density in the range of 120 to 160 kg/m³ with a grain size of 1 to 2 mm and optionally 1 to 9% by weight of expanded glass with a density > 160 kg/m³ with a grain size of 1 to 2 mm, the maximum total proportion of expanded glass being 60% by weight.

7. Insulating plaster according to one of claims 1 to 6, **characterised in that** the superplasticiser k) is melamine sulphonate.

8. Insulating plaster according to one of claims 1 to 7, **characterised in that** the aerogel l) is a silicate-based aerogel.

9. Use of the insulating plaster according to any one of claims 1 to 8 for the production of a ready-to-use thermally insulating plaster.

## Revendications

1. Enduit isolant, qui comprend les substances suivantes :
a) 25 à 40 % en poids, notamment 25 à 35 % en poids, de ciment,
b) 10 à 60 % en poids, notamment 10 à 55 % en poids, de verre expansé,
c) 2 à 7 % en poids, notamment 3 à 6 % en poids, d'une dispersion de polymère d'un copolymère d'éthylène et d'acétate de vinyle,
d) 1 à 50 % en poids, notamment 5 à 45 % en poids, de perlite sous forme de billes ayant une granulométrie de 0,01 à 0,5 mm,
e) 0 à 1 % en poids, notamment 0,5 à 0,8 % en poids, de cellulose,
f) 1 à 9 % en poids, notamment 4 à 7 % en poids, de billes de verre creuses d'un diamètre de 30 à 120 µm,
g) 0 à 1 % en poids, notamment 0,3 à 0,7 % en poids, de fibres de verre,
h) 0 à 0,7 % en poids, notamment 0,3 à 0,6 % en poids, de bentonite de sodium activée,
i) 0 à 0,5 % en poids, notamment 0,15 à 0,35 % en poids, d'un agent dispersant,
j) 0 à 3 % en poids, notamment 0,5 à 1,5 % en poids, de borate de zinc,
k) 0 à 5 % en poids, notamment 0,15 à 0,3 % en poids, d'un agent d'écoulement,
l) 0 à 8 % en poids, notamment 0,15 à 5 % en poids, d'un aérogel ainsi que
m) 0 à 5 % en poids, notamment 0,1 à 0,2 % en poids, d'un composé anti-microbien,
la somme des composants a) à m) étant égale à 100 % en poids.

2. Enduit isolant selon la revendication 1, **caractérisé en ce qu'**il contient les substances a) à m) dans les pourcentages en poids suivants :
a) 25 à 40 % en poids, notamment 25 à 35 % en poids, de ciment,
b) 10 à 30 % en poids, notamment 10 à 25 % en poids, de verre expansé,
c) 2 à 7 % en poids, notamment 3 à 6 % en poids, d'une dispersion de polymère d'un copolymère d'éthylène et d'acétate de vinyle,
d) 30 à 50 % en poids, notamment 30 à 45 % en poids, de perlite sous forme de billes ayant une granulométrie de 0,01 à 0,5 mm,
e) 0 à 1 % en poids, notamment 0,5 à 0,8 % en poids, de cellulose,
f) 1 à 9 % en poids, notamment 4 à 7 % en poids, de billes de verre creuses d'un diamètre de 30 à 120 µm,
g) 0 à 1 % en poids, notamment 0,3 à 0,7 % en poids, de fibres de verre,
h) 0 à 0,7 % en poids, notamment 0,3 à 0,6 % en poids, de bentonite de sodium activée,
i) 0 à 0,5 % en poids, notamment 0,15 à 0,35 % en poids, d'un agent dispersant,
j) 0 à 3 % en poids, notamment 0,5 à 1,5 % en poids, de borate de zinc,
k) 0 à 5 % en poids, notamment 0,15 à 0,3 % en poids, d'un agent d'écoulement,
l) 0 à 8 % en poids, notamment 0,15 à 5 % en poids, d'un aérogel ainsi que
m) 0 à 5 % en poids, notamment 0,1 à 0,2 % en poids, d'un composé anti-microbien,
la somme des composants a) à m) étant égale à 100 % en poids.

3. Enduit isolant selon la revendication 1, **caractérisé en ce qu'**il contient les substances a) à m) dans les pourcentages en poids suivants :
a) 25 à 40 % en poids, notamment 25 à 35 % en poids, de ciment,
b) 30 à 60 % en poids, notamment 35 à 55 % en poids, de verre expansé,
c) 2 à 7 % en poids, notamment 3 à 6 % en poids, d'une dispersion de polymère d'un copolymère d'éthylène et d'acétate de vinyle,
d) 5 à 20 % en poids, notamment 7 à 15 % en poids, de perlite sous forme de billes ayant une granulométrie de 0,01 à 0,5 mm,
e) 0 à 1 % en poids, notamment 0,5 à 0,8 % en poids, de cellulose,
f) 1 à 9 % en poids, notamment 4 à 7 % en poids, de billes de verre creuses d'un diamètre de 30 à 120 µm,
g) 0 à 1 % en poids, notamment 0,3 à 0,7 % en poids, de fibres de verre,
h) 0 à 0,7 % en poids, notamment 0,3 à 0,6 % en poids, de bentonite de sodium activée,
i) 0 à 0,5 % en poids, notamment 0,15 à 0,35 % en poids, d'un agent dispersant,
j) 0 à 3 % en poids, notamment 0,5 à 1,5 % en poids, de borate de zinc,
k) 0 à 5 % en poids, notamment 0,15 à 0,3 % en poids, d'un agent d'écoulement,
l) 0 à 8 % en poids, notamment 0,15 à 5 % en poids, d'un aérogel ainsi que
m) 0 à 5 % en poids, notamment 0,1 à 0,2 % en poids, d'un composé anti-microbien,
la somme des composants a) à m) étant égale à 100 % en poids.

4. Enduit isolant selon l'une quelconque des revendications 1 à 3, **caractérisé en ce que** le verre expansé présente une granulométrie de 0,5 à 4 mm, notamment de 1 à 2 mm.

5. Enduit isolant selon l'une quelconque des revendications 1 à 4, **caractérisé en ce que** le verre expansé présente, pour une granulométrie de 1 à 2 mm, une masse volumique de 100 à 500 kg/m³, comprise entre 100 et 300, de manière particulièrement préférée entre 120 et 270 kg/m³.

6. Enduit isolant selon la revendication 3, **caractérisé en ce qu'**il contient de 30 à 55 % en poids, notamment de 35 à 55 % en poids, de verre expansé ayant une masse volumique dans la plage de 120 à 160 kg/m³ pour une granulométrie de 1 à 2 mm et, en option, de 1 à 9 % en poids de verre expansé ayant une masse volumique > 160 kg/m³ pour une granulométrie de 1 à 2 mm, la proportion totale maximale de verre expansé étant de 60 % en poids.

7. Enduit isolant selon l'une quelconque des revendications 1 à 6, **caractérisé en ce que** l'agent d'écoulement k) est du sulfonate de mélamine.

8. Enduit isolant selon l'une quelconque des revendications 1 à 7, **caractérisé en ce que** l'aérogel I) est un aérogel à base de silicate.

9. Utilisation de l'enduit isolant selon l'une quelconque des revendications 1 à 8 pour la réalisation d'un enduit isolant thermique prêt à l'emploi.
